# DEMANDE DE BREVET EUROPEEN

(11) **EP 4 851 921 A1**
(43) Date de publication de la demande: **09.12.2026**
(21) Numéro de dépôt: 26182020.3
(22) Date de dépôt: 29.05.2026
(51) Int. Cl.: G06T 7/593, G06T 7/73

(54) **SYSTÈME ET PROCÉDÉ DE DÉTECTION ET DE DÉTERMINATION DE LA POSITION D'AU MOINS UN OBJET**

(30) Priorité: 04.06.2025 FR 2505996
(71) Demandeur: SNCF Gares et Connexions, 75013 Paris (FR)
(72) Inventeur: NICODEME, Claire, 92190 Meudon (FR); YOU, Borachhun, 78000 Versailles (FR)
(74) Mandataire: Fache, Sébastien

(57) **Abrégé**

L'invention porte principalement sur un système de détection d'un objet (1) situé dans un lieu public ou privé, comprenant des moyens informatiques configurés pour détecter une partie de l'objet visible (3) par la caméra (2) dans un repère orthogonal à trois axes, deux des axes définissant un plan (P) correspondant au sol du lieu et le troisième axe définissant une hauteur perpendiculaire audit plan (P), et pour projeter sur le plan (P) correspondant au sol une partie de l'objet invisible (4) pour la caméra (2).

## Description

### DOMAINE TECHNIQUE

L'invention s'inscrit dans le domaine de la vision par ordinateur, et plus précisément dans le domaine de la reconnaissance de la détermination de la position d'objets inanimés et/ou d'individus dans les lieux publics ou privés.

### ART ANTERIEUR ET INCONVENIENTS DE L'ART ANTERIEUR

Pour accompagner les personnes en situation de handicap, et en particulier les mal-voyants, il est prévu de moyens permettant de diffuser des informations spécifiques pour faciliter l'orientation de ces personnes souhaitant monter à bord de véhicules de transport en commun.

Il est connu, via des systèmes de vision type caméra reliés à des moyens informatique mettant en œuvre des algorithmes de vision par ordinateur, de repérer des objets et des individus statiques ou en déplacement et de déterminer leur position sur le sol.

Cependant, la détermination des coordonnées de position se complique en cas d'affluence, car il devient difficile de repérer les objets/individus sur le sol dans ces conditions.

### OBJECTIF DE L'INVENTION

L'invention vise donc à proposer un système et un procédé qui facilitent le repérage des objets et des individus dans les lieux publics ou privé.

### EXPOSE DE L'INVENTION

À cet effet, l'invention vise un système de détection d'un objet présent dans un lieu, notamment public, comprenant au moins une caméra vidéo et des moyens informatiques de détection de l'objet dans le champ de vision de la caméra et de détermination de la position dudit objet, les moyens informatiques étant configurés, lorsque la caméra est orientée dans une zone déterminée du lieu et est dans un mode d'acquisition d'images, pour :
- Déterminer au moins une coordonnée de hauteur h_{c} de la caméra à partir d'une pose de ladite caméra dans un repère orthogonal à trois axes, deux des axes définissant un plan correspondant au sol du lieu et le troisième axe définissant la hauteur perpendiculaire audit plan ;
- Détecter, dans au moins une image en deux dimensions acquise par la caméra, une partie de l'objet visible par ladite caméra, lequel objet comprend une autre partie invisible par la caméra ;
- Déterminer une troisième dimension de profondeur dans l'image acquise ;
- Déterminer la longueur d₁ d'un premier vecteur, reliant la caméra et ladite partie visible de l'objet ;
- Prolonger le premier vecteur par un second segment jusqu'au plan correspondant au sol, les deux vecteurs étant orientés dans une même direction, et déterminer la longueur cumulée d_{T} du premier vecteur et du second vecteur ;
- Déterminer la hauteur hₒ de l'objet à partir de la coordonnée de hauteur h_{c} de la caméra, de la longueur d₁ du premier vecteur et de la longueur cumulée d_{T} des premier et second vecteur, et
- Projeter la partie visible de l'objet sur le plan correspondant au sol, laquelle projection correspond à la partie invisible de l'objet.

Le système peut également comporter les caractéristiques optionnelles suivantes considérées isolément ou selon toutes les combinaisons techniques possibles :
- Les moyens informatiques sont configurés pour réaliser préalablement une image tridimensionnelle de la zone déterminée dans le repère orthogonal à trois axes.
- Les moyens informatiques sont configurés pour déterminer la dimension de profondeur dans l'image acquise à partir des données d'une seule caméra.
- Le système de détection comprend au moins deux caméras disposées à des endroits différents dans le lieu, lesquels moyens informatiques sont configurés pour déterminer la dimension de profondeur à partir d'au moins deux images acquises respectivement par des deux caméras.

L'invention vise également un procédé de détection d'un objet présent dans un lieu, notamment public, avec un système de détection d'un objet comprenant au moins une caméra vidéo orientée dans une zone déterminée du lieu et qui est dans un mode d'acquisition d'images et des moyens informatiques de repérage de l'objet dans le champ de vision de la caméra et de détermination de la position dudit objet, selon les étapes suivantes :
- Détermination d'au moins une coordonnée de hauteur h_{c} de la caméra à partir d'une pose de ladite caméra dans un repère orthogonal à trois axes, deux des axes définissant un plan correspondant au sol du lieu et le troisième axe définissant la hauteur perpendiculaire audit plan ;
- Détection dans au moins une image en deux dimensions acquise par la caméra, d'une partie de l'objet visible par ladite caméra, lequel objet comprend une autre partie invisible par la caméra ;
- Détermination d'une troisième dimension de profondeur dans l'image acquise ;
- Détermination de la longueur d₁ d'un premier vecteur reliant la caméra et ladite partie visible de l'objet ;
- Prolongation du premier vecteur par un second vecteur jusqu'au plan correspondant au sol, les deux vecteurs étant orientés dans une même direction, et détermination de la longueur cumulée d_{T} du premier vecteur et du second vecteur ;
- Détermination de la hauteur hₒ de l'objet à partir de la coordonnée de hauteur h_{c} de la caméra, de la longueur d₁ du premier vecteur et de la longueur cumulée d_{T} des premier et second vecteurs, et
- Projection de la partie visible de l'objet sur le plan correspondant au sol, laquelle projection correspond à la partie invisible de l'objet.

Le procédé peut également comporter les caractéristiques optionnelles suivantes considérées isolément ou selon toutes les combinaisons techniques possibles :
- Le procédé comprend une étape préalable de réalisation d'une image tridimensionnelle de la zone déterminée dans le repère orthogonal à trois axes.
- Les moyens informatiques déterminent la hauteur hₒ de l'objet selon la formule : ${h}_{o} = \frac{{h}_{c} \times {d}_{1}}{{d}_{T}}$.
- Les moyens informatiques déterminent la dimension de profondeur dans l'image acquise à partir des données d'une seule caméra.
- Le système de détection comprend au moins deux caméras disposées à des endroits différents dans le lieu, lesquels moyens informatiques déterminent la dimension de profondeur à partir d'au moins deux images acquises respectivement par des deux caméras.

### PRESENTATION DES FIGURES

D'autres caractéristiques et avantages de l'invention ressortiront clairement de la description qui en est donnée ci-dessous, à titre indicatif et nullement limitatif, en référence à la figure annexée :

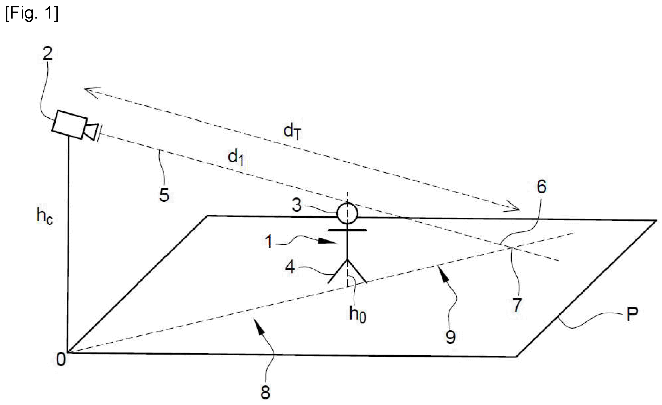

[Fig. 1] La figure 1 représente un schéma illustrant les données prises en comptes pour la détermination de la projection de l'objet dans le plan correspondant au sol.

### DESCRIPTION DETAILLEE DE L'INVENTION

Il est précisé que la figure représente essentiellement un mode de réalisation de l'objet de l'invention mais qu'il peut exister d'autres modes de réalisation qui répondent à la définition de l'invention.

L'invention porte sur système et un procédé de détection d'un objet 1 dans un lieu public ou privé, par exemple et de manière non limitative une gare ferroviaire. L'invention trouve également son application dans un lieu privé, par exemple un entrepôt ou un magasin. Par objet, l'homme du métier comprend qu'il peut s'agir d'un objet inanimé - comme une valise - ou d'un objet animé, comme un animal ou un individu. Dans la suite de la description, on utilisera le terme « objet ».

Un tel système comprend au moins un dispositif de vision de type caméra vidéo 2, et préférentiellement plusieurs caméras vidéo 2. Chacune de ces caméras 2 comprend classiquement un capteur numérique du type CMOS ou CCD, lequel capteur est caractérisé par une matrice de cellules couramment appelé pixels et définissant la définition dudit capteur. Chaque caméra 2 comprend également une lentille définie par sa focale f et par son centre optique.

Le système de l'invention comprend également des moyens informatiques de détection d'au moins une partie de l'objet 3 et de détermination de sa position dans un repère orthogonal à trois axes. Ces moyens informatiques permettent également de commander le ou les dispositifs de vision 2. En outre, les moyens informatiques sont configurés pour mettre en œuvre le procédé de l'invention.

En premier lieu, l'homme du métier comprend que le procédé est mis en œuvre par des moyens de calculs desdits moyens informatiques, implémentant un ou des algorithmes enregistrés dans un espace mémoire desdits moyens informatiques.

Dans le cadre de la mise en œuvre du procédé, la caméra 2 est orientée vers une zone déterminée du lieu, et réalise une acquisition périodique d'images, et le cas échéant un enregistrement périodique dans l'espace mémoire des moyens informatiques.

Préalablement à la mise en œuvre du procédé de l'invention, les moyens informatiques réalisent E0 une image tridimensionnelle de la zone déterminée. Une telle image tridimensionnelle est réalisée à partir d'une pluralité d'images bidimensionnelles du lieu acquises en différents endroits du lieu par différents dispositifs de vision. Ces images bidimensionnelles sont ensuite utilisées pour reconstruire une image tridimensionnelle selon des méthodes connues, notamment les méthodes d'imagerie par intervalle photogrammétrique, par exemple et de manière non limitative selon le principe de structure acquise à partir d'un mouvement (de l'anglais « structure from motion »).

Cette image tridimensionnelle est associée au repère orthogonal à trois axes. Ce repère orthogonal comprend deux axes définissant un plan P correspondant au seul du lieu et un troisième axe partant du plan et du point de coordonnées nulles et définissant une coordonnée de hauteur. Ainsi, tout point de l'image tridimensionnelle disposée dans le plan a une coordonnée de hauteur nulle.

Les moyens informatiques vont ainsi mettre en œuvre le procédé de détection de l'objet 1 et de détermination de sa position dans le repère orthogonal associé à l'image tridimensionnelle.

Au cours d'une première étape E1 du procédé, les moyens informatiques détectent une pose de la ou des caméras 2 installées dans le lieu, dans le repère orthogonal, afin de déterminer au moins la coordonnée de hauteur h_{c} de la ou des caméras 2. Par pose de la caméra 2, on entend la position de la caméra 2 par rapport au référentiel orthogonal et l'orientation du capteur dans ce même repère.

Au cours d'une seconde étape E2, les moyens informatiques détectent, dans au moins une image bidimensionnelle acquise par la caméra 2, une partie visible 3 d'un objet 1 situé dans le champ de vision de ladite caméra 2. Cet objet 1 peut être statique ou bien en mouvement. Bien que dans le champ de vision de la caméra 2, il existe des situations pour lesquelles cet objet 1 comprend une partie visible 3 par la caméra 2 et une partie invisible 4 par la caméra 2. Par exemple, en cas de forte affluence dans le lieu, la ou les caméras 2 seront capables de détecter les têtes des individus 1 circulant dans le lieu, mais les jambes et les pieds seront invisibles par la ou les caméras 2. Dans ce cas précis, la tête de l'individu 1 forme la partie visible de l'objet 3, tandis que ses pieds, au contact du plan P correspondant au sol, forment la partie invisible de l'objet 4

Ce type de détection est bien connue et est réalisée par au moins un algorithme par apprentissage profond, qui permet en outre de classifier un ensemble de pixels représentatifs de l'objet identifié 1, statique ou en mouvement.

Au cours d'une troisième étape E3, les moyens informatiques déterminent une troisième dimension de profondeur dans la ou les images acquises par la ou les caméras 2.

Si le système comprend au moins deux caméras 2, alors l'information relative à la troisième dimension de profondeur est obtenue via des méthodes connues de stéréoscopie. Les données provenant des différentes caméras 2 sont ainsi fusionnées par les moyens informatiques pour obtenir une information de profondeur dans les images acquises.

De manière alternative, lorsque le système ne comprend qu'une seule caméra 2, les moyens informatiques mettent en œuvre des méthodes connues dite d'estimation de profondeur monoculaire (de l'anglais « Monocular Depth Estimation ») pour une information de profondeur dans les images acquises par cette unique caméra 2.

Une fois l'information de profondeur dans les images obtenues, et au cours d'un quatrième étape E4, les moyens informatiques déterminent la longueur (ou norme) d₁ d'un premier vecteur 5 reliant la caméra 2 et la partie visible de l'objet 3 (c'est-à-dire la tête dans le cas d'un individu).

La partie visible de l'objet 3 se trouve au-dessus du plan P correspondant au sol, elle possède donc une hauteur hₒ non nulle dans le repère orthogonal.

Au cours d'une cinquième étape E5, les moyens informatiques prolongent le premier vecteur 5 par un second vecteur 6 jusqu'au plan P correspondant au sol. Ce second vecteur 6 est orienté selon la même direction que le premier vecteur 5. Les moyens informatiques déterminent alors la longueur (ou norme) cumulée d_{T} du premier vecteur 5 et du second vecteur 6 aboutés, lequel second vecteur 6 relie la partie visible de l'objet 3 et le plan P correspondant au sol. Les moyens informatiques ont ainsi calculé la distance d₁ entre la caméra 2 et la partie visible 3 selon le premier vecteur 5, et la distance d_{T} entre la caméra et le sol selon le premier vecteur 5 et le second vecteur 6 aboutés.

Au cours d'une sixième étape E6, les moyens informatiques déterminent la hauteur de l'objet hₒ à partir de la hauteur h_{c} de la caméra 2, de la distance d_{T} séparant la caméra 2 du sol selon les premier et second vecteurs 5, 6 et de la distance d₁ séparant la caméra 2 de la partie visible de l'objet 3, selon le premier vecteur 5.

Plus précisément et en référence à la figure 1, les moyens informatiques déterminent dans le repère orthogonal à trois axes un premier triangle 8 dont les trois sommets sont respectivement la caméra 2, le point de coordonnées nulles dans le repère orthogonal et le point de croisement 7 entre le second vecteur 6 et le plan P correspondant au sol. Par ailleurs, les moyens informatiques déterminent dans le repère orthogonal à trois axes un second triangle 9 dont les trois sommets sont respectivement la partie visible de l'objet 3, la partie invisible de l'objet 4 située dans le plan P et le point de croisement 7 entre le second vecteur 6 et le plan P correspondant au sol.

Ainsi, pour déterminer la hauteur hₒ de l'objet 1, les moyens informatiques appliquent la formule correspondant au théorème de Thalès : ${h}_{o} = \frac{{h}_{c} \times {d}_{1}}{{d}_{T}}$.

Enfin au cours d'une septième étape, les moyens informatiques projettent la partie visible de l'objet 3 dans le plan P correspondant au sol : cette projection correspond à la partie invisible de l'objet 4.

Le système et le procédé de l'invention permettent donc de repérer la totalité d'un objet 1 dans le champ de vision de la caméra 2, et en particulier les parties de l'objet 4 qui sont au contact du sol, pour permettre ultérieurement la détermination des coordonnées de la partie invisible de l'objet 4 dans le repère de l'image, puis dans le repère de la caméra 2 et enfin dans le repère lié au référentiel terrestre.

Par ailleurs, le système et le procédé de l'invention offrent un avantage supplémentaire : lorsque le système met en œuvre le procédé de l'invention pour détecter des individus 1, les moyens informatiques peuvent être configurés pour ne renvoyer que la partie invisible de l'individu 4 - c'est-à-dire ses pieds. C'est un avantage pour une mise en œuvre de ce procédé dans les lieux où l'anonymat des individus 1 doit être préservé.

## Revendications

1. Système de détection d'un objet (1) présent dans un lieu, notamment public, comprenant au moins une caméra vidéo (2) et des moyens informatiques de détection de l'objet (1) dans le champ de vision de la caméra (2) et de détermination de la position dudit objet (1), les moyens informatiques étant configurés, lorsque la caméra (2) est orientée dans une zone déterminée du lieu et est dans un mode d'acquisition d'images, pour ;
• Déterminer (E1) au moins une coordonnée de hauteur h_{c} de la caméra (2) à partir d'une pose de ladite caméra (2) dans un repère orthogonal à trois axes, deux des axes définissant un plan (P) correspondant au sol du lieu et le troisième axe définissant la hauteur perpendiculaire audit plan (P) ;
• Détecter (E2), dans au moins une image en deux dimensions acquise par la caméra (2), une partie de l'objet visible (3) par ladite caméra (2), lequel objet comprend une autre partie invisible (4) par la caméra (2) ;
• Déterminer (E3) une troisième dimension de profondeur dans l'image acquise ;
• Déterminer (E4) la longueur d₁ d'un premier vecteur (5) reliant la caméra (2) et ladite partie visible de l'objet (3) ;
• Prolonger (E5) le premier vecteur (5) par un second vecteur (6) jusqu'au plan (P) correspondant au sol, les deux vecteurs (5, 6) étant orientés dans une même direction, et déterminer la longueur cumulée d_{T} du premier vecteur (5) et du second vecteur (6) ;
• Déterminer (E6) la hauteur hₒ de l'objet à partir de la coordonnée de hauteur h_{c} de la caméra (2), de la longueur d₁ du premier vecteur (5) et de la longueur cumulée d_{T} des premier et second vecteurs (5, 6), et
• Projeter (E7) la partie visible de l'objet (3) sur le plan (P) correspondant au sol, laquelle projection correspond à la partie invisible de l'objet (4).

2. Système selon la revendication précédente, **caractérisé en ce que** les moyens informatiques sont configurés pour réaliser préalablement (E0) une image tridimensionnelle de la zone déterminée dans le repère orthogonal à trois axes.

3. Système selon la revendication 1 ou 2, **caractérisé en ce que** les moyens informatiques sont configurés pour déterminer (E3) la dimension de profondeur dans l'image acquise à partir des données d'une seule caméra (2).

4. Système selon la revendication 1 ou 2, **caractérisé en ce que** le système de détection comprend au moins deux caméras (2) disposées à des endroits différents dans le lieu, et **en ce que** les moyens informatiques sont configurés pour déterminer (E3) la dimension de profondeur à partir d'au moins deux images acquises respectivement par des deux caméras (2).

5. Procédé de détection d'un objet (1) présent dans un lieu, notamment public, avec un système de détection d'un objet (1) comprenant au moins une caméra vidéo (2) orientée dans une zone déterminée du lieu et qui est dans un mode d'acquisition d'images et des moyens informatiques de repérage de l'objet (1) dans le champ de vision de la caméra et de détermination de la position dudit objet (1), selon les étapes suivantes :
• Détermination (E1) d'au moins une coordonnée de hauteur h_{c} de la caméra (2) à partir d'une pose de ladite caméra (2) dans un repère orthogonal à trois axes, deux des axes définissant un plan (P) correspondant au sol du lieu et le troisième axe définissant la hauteur perpendiculaire audit plan (P) ;
• Détection (E2), dans au moins une image en deux dimensions acquise par la caméra (2), d'une partie de l'objet visible (3) par ladite caméra (2), lequel objet (1) comprend une autre partie invisible (4) par la caméra (2) ;
• Détermination (E3) d'une troisième dimension de profondeur dans l'image acquise ;
• Détermination (E4) de la longueur d₁ d'un premier vecteur (5) reliant la caméra (2) et ladite partie visible de l'objet (3) ;
• Prolongation (E5) du premier vecteur (5) par un second vecteur (6) jusqu'au plan (P) correspondant au sol, les deux vecteurs (5, 6) étant orientés dans une même direction, et détermination de la longueur cumulée d_{T} du premier vecteur et du second vecteur (5, 6) ;
• Détermination (E6) de la hauteur hₒ de l'objet (1) à partir de la coordonnée de hauteur h_{c} de la caméra (2), de la longueur d₁ du premier vecteur (5) et de la longueur cumulée d_{T} des premier et second vecteurs (5 ,6), et
• Projection (E7) de la partie visible de l'objet (3) sur le plan (P) correspondant au sol, laquelle projection correspond à la partie invisible de l'objet (4).

6. Procédé selon la revendication précédente, **caractérisé en ce qu'**il comprend une étape préalable de réalisation (E0) d'une image tridimensionnelle de la zone déterminée dans le repère orthogonal à trois axes.

7. Procédé selon la revendication précédente, **caractérisé en ce que** les moyens informatiques déterminent la hauteur hₒ de l'objet (1) selon la formule : ${h}_{o} = \frac{{h}_{c} \times {d}_{1}}{{d}_{T}}$ .

8. Procédé selon la revendication 5 ou 6, **caractérisé en ce que** les moyens informatiques déterminent (E3) la dimension de profondeur dans l'image acquise à partir des données d'une seule caméra (2).

9. Procédé selon la revendication 5 ou 6, **caractérisé en ce que** le système de détection comprend au moins deux caméras (2) disposées à des endroits différents dans le lieu, et **en ce que** les moyens informatiques déterminent (E3) la dimension de profondeur à partir d'au moins deux images acquises respectivement par des deux caméras (2).
